# EUROPEAN PATENT APPLICATION

(11) **EP 2 408 242 A1**
(43) Date of publication of application: **18.01.2012**
(21) Application number: 09841292.7
(22) Date of filing: 12.03.2009
(51) Int. Cl.: H04W 56/00

(54) **METHOD FOR PERFORMING CONTENT SYNCHRONIZATION FOR DOWNLINK SERVICE DATA IN COLLABORATIVE MIMO AND APPARATUS THEREOF**

(71) Applicant: Alcatel Lucent, 75008 Paris (FR)
(72) Inventor: WANG, He, Shanghai 201206 (CN); ZHANG, Bijun, Shanghai 201206 (CN); HU, Zhongji, Shanghai 201206 (CN)
(74) Representative: Dreiss
(86) International application number: PCT/CN2009/000262
(87) International publication number: WO 2010/102423

(57) **Abstract**

A method for controlling, in collaborative MIMO of a wireless communication network, downlink service data in collaborative MIMO to perform content synchronization is provided in the present invention. The method comprises: performing, by a serving base station in the collaborative MIMO, data link layer processing on service data to be transmitted to a mobile station, so as to achieve a first data packet, and transmitting the first data packet to other collaborative base station(s) in the collaborative MIMO; thereafter, transmitting, by each base station (which may or may not include the serving base station) participating in transmitting data packets in the collaborative MIMO, the first data packet to the mobile station on the same time-frequency resource. With the technical solution of the present invention, it can be realized effectively that each base station in the collaborative MIMO transmits the same data to the mobile station on the same time-frequency resource. Namely, content synchronization of downlink service data in the collaborative MIMO can be realized.

## Description

### Field of the Invention

The present invention relates to the field of collaborative MIMO in a wireless relay communication network, and more particularly relates to a base station in collaborative MIMO.

### Background of the Invention

In LTE-Advanced, collaborative multi-point (CoMP) transmitting/receiving is regarded as the most potential technology for managing inter-cell interference and improving the performance of cell edge users. One processing scheme of collaborative multi-point transmission/receiving is collaborative MIMO (Multiple Input Multiple Output).

For executing effective and correct collaborative MIMO, multiple eNBs (Evolved Node B, or called base station) working collaboratively are requested to transmit data of the same content on the same time-frequency resource. The problem of how the collaborative base stations can transmit data of the same content on the same time-frequency resource is the problem of content synchronization in collaborative MIMO.

Currently in LTE eMBMS, in order to execute correct MBSFN operation, content synchronization mechanism is also required. For MBMS, the processing at PDCP layer locates in a MBMS gateway, wherein after the MBMS gateway performs unified PDCP layer process for data packets to be transmitted, the data packets are transmitted to each base station by means of IP multicast. Each base station then performs RLC processing, MAC processing and scheduling for the transmitted data packets according to predefined rules. After data link layer processing, each base station obtains a data packet of the same content, and then each base station performs the same physical layer processing, so that the data packets sent out by each base station are exactly the same.

In LTE-Advanced, the PDCP processing for unicast data packets is performed by each base station, because the PDCP processing of a unicast data packet should be performed in combination with the characteristic information (such as base station identification, link identification etc.) of the current base station and of the mobile station. Therefore, if the PDCP processing for the data packets transmitted to the mobile station in the collaborative MIMO is performed separately by each base station, the data packets obtained by performing the PDCP processing by each base station will be different from each other, so that content synchronization cannot be realized.

Due to the difference in protocol stack between MBMS and unicast, the service characteristic of MBMS and unicast are also different. Therefore, the content synchronization mechanism of MBMS cannot be applied to the unicast service of collaborative MIMO.

### Summary of the Invention

For the problem described in the technical background, the present invention proposes a method of controlling, in collaborative MIMO of a wireless communication network, content synchronization of downlink service data in the collaborative MIMO: performing, by a serving base station in the collaborative MIMO, data link layer processing for service data to be transmitted to the mobile station, so as to achieve a first data packet, and transmitting the first data packet to the other collaborative base station(s) in the collaborative MIMO; thereafter, transmitting, by each base station (which may or may not include the serving base station) participating in transmitting data packets in the collaborative MIMO, the first data packet to the mobile station on the same time-frequency resource.

According to a first aspect of the present invention, there is provided a method of controlling, in a serving base station in collaborative MIMO of a wireless network, content synchronization of downlink service data in the collaborative MIMO, characterized by comprising the steps of: a. performing data link layer processing for service data to be transmitted to a mobile station, so as to achieve a first data packet; b. determining information about a first time-frequency resource for transmitting said first data packet; c. respectively transmitting said first data packet to other collaborative base station(s) in said collaborative MIMO, and transmitting said information about said first time-frequency resource to said other collaborative base station(s).

According to a second aspect of the present invention, there is provided a method of controlling, in a collaborative base station in collaborative MIMO of a wireless network, content synchronization of downlink service data in the collaborative MIMO, **characterized in that**, the method comprises the steps of: A. receiving, from a serving base station, a first data packet for which data link layer processing is performed by said serving base station, and information about a first time-frequency resource for transmitting the first data packet determined by said serving base station; B. performing modulation and coding processing for said first data packet, so as to achieve a fourth data packet; C. transmitting said fourth data packet to a mobile station on said first time-frequency resource.

According to a third aspect of the present invention, there is provided a controlling apparatus in a serving base station in collaborative MIMO of a wireless network for controlling content synchronization of downlink service data in the collaborative MIMO, **characterized in that** the controlling apparatus comprises a processing unit, a first determining unit and a first transmitting unit; wherein, the processing unit is configured to perform data link layer processing for service data to be transmitted to a mobile station, so as to achieve a first data packet; the first determining unit is configured to determine information about a first time-frequency resource for transmitting said first data packet; the first transmitting unit is configured to transmit said first data packet to all other collaborative base station(s) in said collaborative MIMO, and to transmit said information about said first time-frequency resource to said other collaborative base station(s).

According to a fourth aspect of the present invention, there is provided a synchronization apparatus in a collaborative base station in collaborative MIMO of a wireless communication network, for performing content synchronization of downlink service data in the collaborative MIMO, **characterized in that** the synchronization apparatus comprises a receiving unit, a third modulation and coding unit and a fourth transmitting unit; wherein, the receiving unit is configured to receive, from a serving base station, a first data packet for which data link layer processing is performed by the serving base station, and information about a first time-frequency resource for transmitting the first data packet determined by the serving base station; the third modulation and coding unit is configured to perform modulation and coding for said first data packet, so as to achieve a fourth data packet; the fourth transmitting unit is configured to transmit said fourth data packet to a mobile station on said first time-frequency resource.

With the technical solution of the present invention, it can be realized effectively that each base station in the collaborative MIMO transmits the same data to the mobile station on the same time-frequency resource. In case that the data packet transmitted by the serving base station in the collaborative MIMO to the other collaborative base station(s) in the collaborative MIMO is lost, data synchronization can be maintained well without producing interference by making the collaborative base stations in the collaborative MIMO keep silent on the time-frequency resource for transmitting the lost data packet, namely not transmitting any data. The serving base station communicates with the other collaborative base station(s) via X2 interface, which makes the content synchronization mechanism very effective and capable of being quickly adjusted with the adjustment of the member base stations of the collaborative MIMO. The synchronization scheme of the present invention almost has no impact on the structure design of the current base station and on the current X2 interface of the base station.

### Brief Description of Drawings

Other features, objectives and advantages of the present invention will become more apparent from the following detailed description of the non-limiting embodiments taken in conjunction with the accompanying drawing.
Figure 1 is a schematic diagram for an application scenario of collaborative MIMO according to an embodiment of the present invention;
Figure 2 is a flowchart of a controlling method of controlling, in a serving base station in collaborative MIMO of a wireless communication network, content synchronization of downlink service data in the collaborative MIMO according to an embodiment of the present invention;
Figure 3 is a flowchart for performing modulation and coding processing and transmission for a first data packet in a serving base station in collaborative MIMO of a wireless communication network according to an embodiment of the present invention;
Figure 4 is a flowchart for performing, in a collaborative base station in a collaborative MIMO of a wireless communication network, content synchronization of downlink service data of the collaborative MIMO according to an embodiment of the present invention;
Figure 5 is a flowchart for determining, by serving base station 111 in collaborative MIMO of a wireless communication network, a corresponding modulation and coding scheme for each base station of the collaborative MIMO according to the information associated with channel quality of the downlink channel from each base station to mobile station 12 according to an embodiment of the present invention;
Figure 6 is a flowchart for performing, by serving base station 111 in the collaborative MIMO of a wireless communication network, modulation and coding and transmission for a first data packet according to the modulation and coding scheme determined by itself according to an embodiment of the present invention;
Figure 7 is a diagram of a MAC scheduling period and data transmission in collaborative MIMO of a wireless communication network according to an embodiment of the present invention;
Figure 8 is a flowchart for performing, in collaborative base stations 112 and 113 in collaborative MIMO of a wireless communication network, content synchronization in the case that a data packet is lost;
Figure 9 is a block diagram of a controlling apparatus in a collaborative base station of collaborative MIMO of a wireless communication network for performing content synchronization for downlink service data according to an embodiment of the present invention;
Figure 10 is a block diagram of a synchronization apparatus in a collaborative station of collaborative MIMO of a wireless communication network for performing content synchronization for the downlink service data according to an embodiment of the present invention;
wherein, the identical or similar reference signs indicate the identical or similar procedure or apparatus (modules).

### Detailed Description of Embodiments

Non-limiting embodiments of the present invention will be described in detail in conjunction with the accompanying drawings in the following.

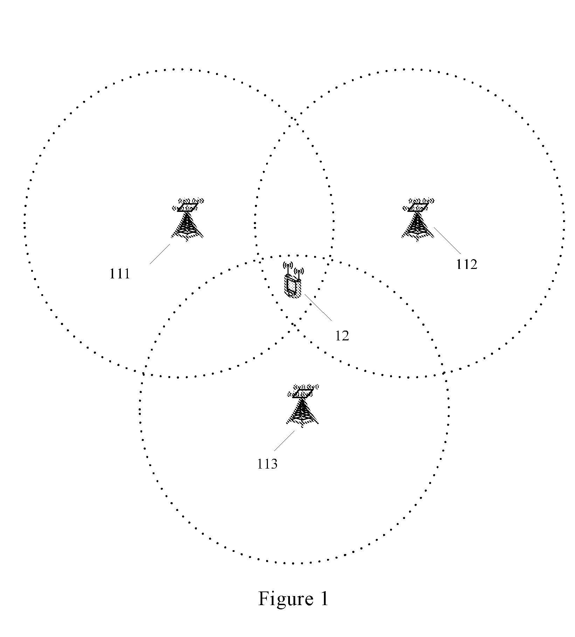

Figure 1 shows a schematic diagram of an application scenario according to an embodiment of the present invention. In Figure 1, base station 111, which is the serving base station, communicates with mobile station 12, including transmitting and receiving service data and control signaling. Base station 112, 113 are collaborative base stations and only participate in forwarding downlink service data to mobile station 12.

It should be explained that, in the application scenario shown in Figure 1, the member base stations participating in transmitting downlink service data of the collaborative MIMO can be base station 111, base station 112 and base station 113, also can be base station 112 and base station 113, also can be base station 111 and base station 112, or base station 111 and base station 113. Serving base station 111 can determine the member base stations that collaboratively transmit the downlink service data to mobile station 12 according to channel quality from each base station to mobile station 12 and parameters like the load of each base station etc. Specifically, how to determine member base stations in collaborative MIMO is not directly related to the present invention, and will not be described in detail in the present invention. It is discussed in the present invention that how to maintain content synchronization after the member base stations in the collaborative MIMO are determined, namely how to make each base station in the collaborative MIMO transmit a data packet of the same content to the mobile station on the same time-frequency resource, wherein the data packet of the same content includes the identical data packet processed on which data link layer processing has been performed or the identical data packet on which physical layer processing has been performed.

In the following embodiments, the member base stations in the collaborative MIMO comprise serving base station 111, collaborative base stations 112 and 113, if not specified.

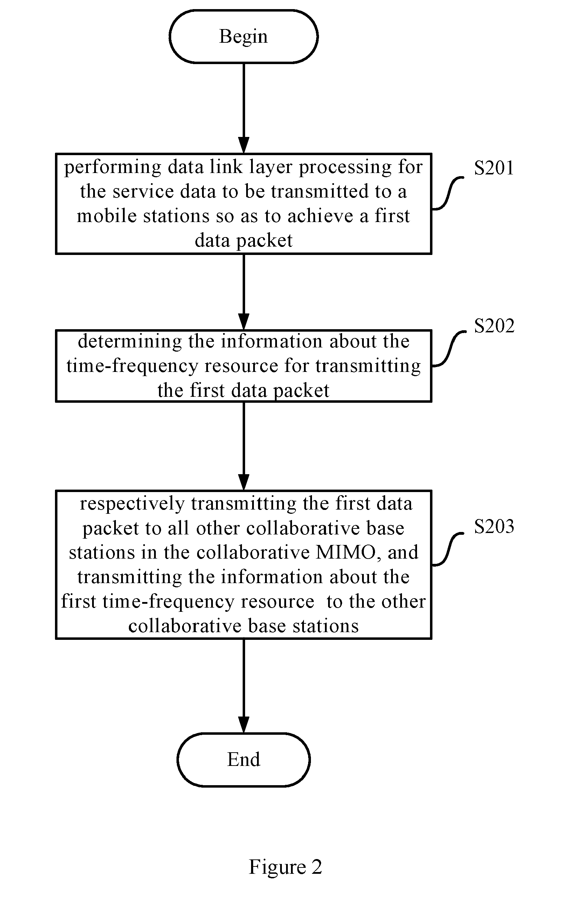

Figure 2 shows a flowchart of a method of controlling, in a serving base station in collaborative MIMO of a wireless communication network, content synchronization of downlink service data in the collaborative MIMO. It will be described in detail by the flow shown in Figure 2 in conjunction with Figure 1.

First, in step S201, serving base station 111 performs data link layer processing for the service data to be transmitted to mobile station 12, so as to achieve a first data packet. For different wireless communication networks, detailed data link layer processing can include different processing procedures. For instance, for LTE-Advanced wireless communication network, the data link layer processing includes PDCP (Packet Date Convergence Protocol) processing, RLC (Radio Link Control) processing and MAC (Media Access Control) processing and scheduling.

Then, in step S202, serving base station 111 determines the time-frequency resource information for transmitting the first data packet.

Finally, in step S203, serving base station 111 transmits the first data packet to other collaborative base stations 112 and 113 in the collaborative MIMO, respectively, and transmits the information about the first time-frequency resource to other collaborative base stations 112 and 113.

For LTE-Advanced wireless communication network, each base station has an X2 interface to communicate with other base stations. In step S203 of Figure 2, base station 111 can transmit the first data packet and the information about the first time-frequency resource to collaborative base stations 112 and 113 via the X2 interface.

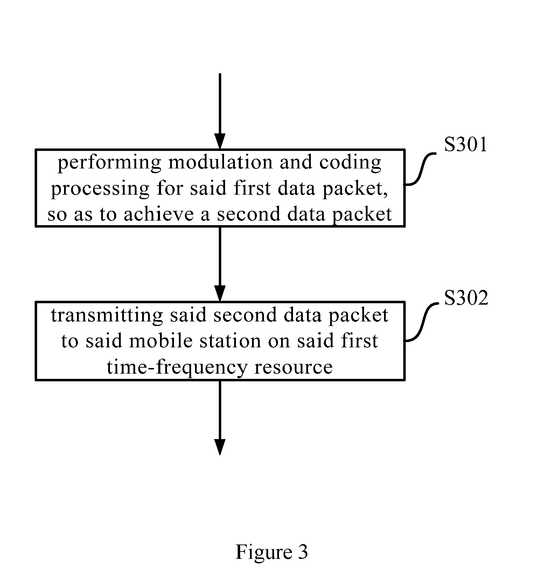

For the application scenario shown in Figure 1, the base stations participating in the downlink service data transmission of the collaborative MIMO can be base station 111, base station 112 and base station 113, can also be base station 112 and base station 113, can also be base station 111 and base station 112, or can be base station 111 and base station 113. In the case that serving base station 111 participates in service data transmission, after the steps shown in Figure 2, base station 111 further executes the steps described in Figure 3.

First, in step S301, serving base station 111 performs modulation and coding processing for the first data packet in step S201 in Figure 2, so as to achieve a second data packet.

Then, in step S302, serving base station 111 transmits the second data packet to mobile station 12 on the first time-frequency resource determined in step S202.

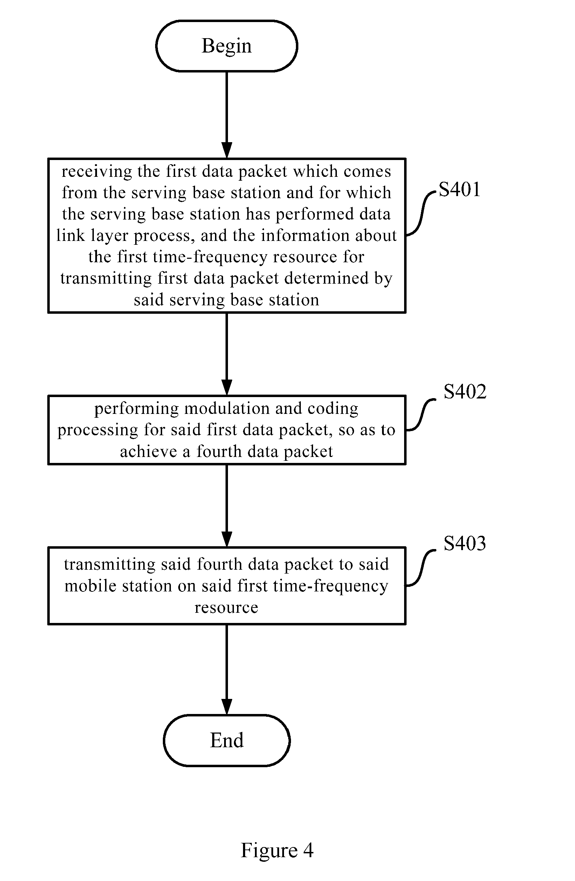

In case that base station 112 and/or base station 113 participate in the service data transmission in the collaborative MIMO, in base station 112 or base station 113, the flow of performing content synchronization for the downlink service data of the collaborative MIMO in collaborative base stations in the collaborative MIMO of the wireless communication network as shown in Figure 4 is executed. Without loss of generality, by taking base station 112 as an example, the flow in Figure 4 is described in detail.

First, in step S401, base station 112 receives the first data packet, which comes from serving base station 111 and for which serving base station 111 has performed data link layer processing, and the information about the first time-frequency resource for transmitting the first data packet determined by serving base station 111.

Then, in step S402, base station 112 performs modulation and coding for the first data packet, so as to achieve a fourth data packet.

Finally, in step S403, base station 112 transmits the fourth data packet to mobile station 12 on the first time-frequency resource.

It should be mentioned that, the formats of the second data packet and the fourth data packet may be the same, or may be different, specifically depending on the modulation and coding schemes adopted by serving base station 111 and collaborative base station 112. If serving base station 111 and collaborative base station 112 adopt the same modulation and coding scheme, the formats of the second data packet and the fourth data packet are the same; if serving base station 111 and collaborative base station 112 adopt different modulation and coding schemes, the formats of the second data packet and the fourth data packet are different.

Specifically, in said collaborative MIMO shown in Figure 1, the way of the modulation and coding scheme adopted by each base station for the first data packet to be transmitted to mobile station 12 includes at least the following two cases: one is that serving base station 111 determines the corresponding modulation and coding scheme for each base station in the collaborative MIMO according to the information associated with channel quality of the downlink channel from each base station to mobile station 12; the other is that each base station in the collaborative MIMO determines, by itself, the modulation and coding scheme for transmitting the first data packet. The two ways are described in detail in the following.

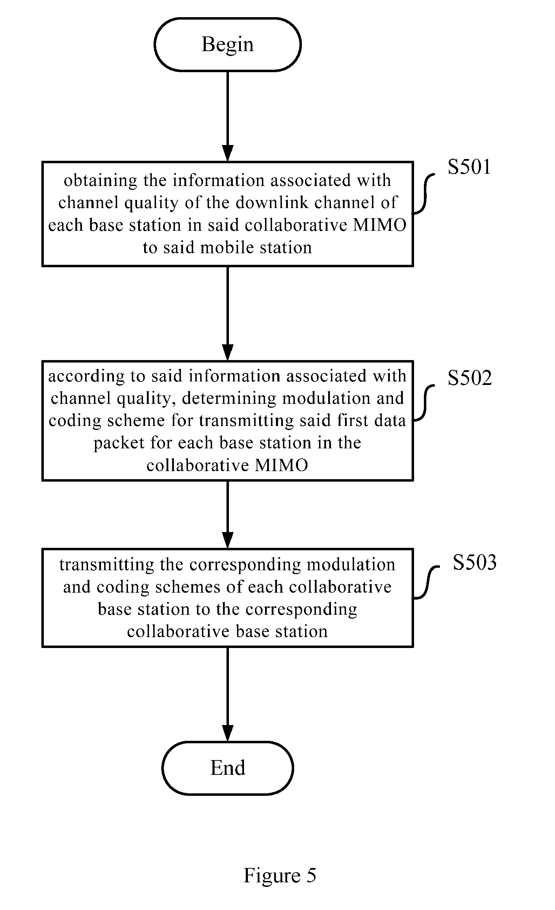

A flowchart of a detailed implementation the first way is shown in Figure 5.

First, in step S501, serving base station 111 obtains the information associated with channel quality of the downlink channel from each of base station 112 and 113 in the collaborative MIMO to mobile station 12.

Specifically, for the collaborative MIMO as shown in Figure 1, serving base station 111 transmits an indication to instruct mobile station 12 to measure the channel quality of the downlink channels from base stations 111, 112 and 113 to it. Mobile station 12 measures the channel quality of the downlink channel from each of base stations 112 and 113 to it, according to the synchronization broadcast information received from each of base stations 112 and 113, so as to achieve information associated with channel quality. Mobile station 12 also measures the channel quality of the downlink channel from serving base station 111 to it according to the unicast or broadcast information received from serving base station 111, so as to achieve information associated with the channel quality. Thereafter, mobile station 12 sends the information associated with channel quality of each channel back to base station 111. The information associated with channel quality refers to the information indicating the channel quality, including but not limited to parameters such as channel quality indicator (CQI) or signal to noise ratio (SNR) or signal to interference and noise ratio (SINR) or the like. Optionally, the information associated with channel quality can be the statistical average value of multiple transient values within a period of time, so as to eliminate the impact of burst interference.

Next, in step S502, serving base station 111 determines, for each base station 112 and 113 in the collaborative MIMO, the modulation and coding scheme for transmitting the first data packet according to the information associated with channel quality obtained in step S501,.

Finally, in step S503, serving base station 111 transmits the corresponding modulation and coding scheme of each collaborative base station 112 and 113 to the corresponding collaborative base station.

Specifically, serving base station 111 can determine, for each base station in the collaborative MIMO, a modulation and coding scheme for transmitting the first data packet. Generally, for the downlink channel with good channel quality indicated by the information associated with channel quality, the modulation and coding scheme with higher data throughput but lower error resilience can be adopted, such as MSC-5 to MSC-9 in Enhanced Data Rate for GSM Evolution (EDGE). For downlink channel with bad channel quality indicated by the information associated with channel quality, the modulation and coding schemes with lower data throughput but higher error resilience can be adopted, such as MCS-1 to MCS-4 in enhanced data rate in Enhanced Data Rate for GSM Evolution.

Optionally, serving base station 111 can also determine, for each base station in the collaborative MIMO, the same modulation and coding scheme for transmitting the first data packet. In the case that serving base station 111 determines the same modulation and coding scheme for each base station in the collaborative MIMO, optionally, serving base station 111 can determine the modulation and coding scheme corresponding to the downlink channel with the worst channel quality as the modulation and coding scheme for each base station in the collaborative MIMO; serving base station 111 can also determine the modulation and coding scheme corresponding to the downlink channel with the worse channel quality as the modulation and coding scheme for each base station in the collaborative MIMO.

In the collaborative MIMO as shown in Figure 1, without loss of generality, the example that the channel quality of the downlink channel from serving base station 111 to mobile station 12 is better than the channel quality of the downlink channel from collaborative base station 112 to mobile station 12, and the channel quality of the downlink channel from serving base station 112 to mobile station 12 is better than the channel quality of the downlink channel from collaborative base station 113 to mobile station 12 is taken to describe an embodiment of determining, by serving base station 111, the same modulation and coding scheme for each base station in the collaborative MIMO.

Without loss of generality, assume that the modulation and coding scheme corresponding to the channel quality of the downlink channel from serving base station 111 to mobile station 12 is MCS5, the modulation and coding scheme corresponding to the channel quality of the downlink channel from collaborative base station 112 to mobile station 12 is MCS4, and the modulation and coding scheme corresponding to the channel quality of the downlink channel from collaborative base station 113 to mobile station 12 is MCS3. Serving base station 111 can either use MCS3 as the modulation and coding scheme for the first data packet for each base station in the collaborative MIMO, or use MCS4 as the modulation and coding scheme for the first data packet for each base station in the collaborative MIMO. Certainly, serving base station 111 can also use MCS5 as the modulation and coding scheme for the first data packet for each base station in the collaborative MIMO.

Above are the detail descriptions for the case that serving base station 111 determines the modulation and coding scheme for each base station in the collaborative MIMO according to the information associated with channel quality of the downlink channel from each base station in the collaborative MIMO to mobile station 12. The followings are the detail descriptions for the case that each base station in the collaborative MIMO determines, by itself, the modulation and coding scheme for transmitting the first data packet.

The case that each base station in the collaborative MIMO determines, by itself, the modulation and coding scheme for transmitting the first data packet can further be divided into two cases: 1) each base station adopts the same modulation and coding scheme for the data packet to be collaboratively transmitted to mobile station 12 according to a prior agreement; 2) each base station in the collaborative MIMO independently determines the modulation and coding scheme for transmitting the first data packet.

Because in the collaborative MIMO, mobile station 12 usually locates on the edge of each cell, each base station can therefore adopt the modulation and coding scheme with lower data throughput but higher error resilience.

For case 1) as mentioned above, for example, for LTE-Advanced wireless communication network, each base station in the collaborative MIMO can make an agreement in advance to adopt the modulation and coding scheme of MCS3.

For case 2) as mentioned above, each base station in the collaborative MIMO independently determines the modulation and coding scheme for transmitting the first data packet. The modulation and coding scheme independently determined by each base station may be the same or may be different. For example, for LTE-Advanced wireless communication network, serving base station 111 can adopt the modulation and coding scheme of MCS4; collaborative base station 112 can adopt the modulation and coding scheme of MCS3; collaborative base station 113 can adopt the modulation and coding scheme of MCS3.

The advantage of adopting the same modulation and coding scheme for each base station in the collaborative MIMO is that each base station transmits exactly the identical data packet to mobile station 12 on the first time-frequency resource, namely that the mobile station 12 combines, in radio frequency, the second data packet or the third data packet transmitted by serving base station 111 and the fourth data packet transmitted by collaborative base station 113 or 114 without the need of distinguishing which base station the data packets come from.

When each base station in the collaborative MIMO adopts a different modulation and coding scheme, the data packet transmitted by each base station is different, and after receiving the data packet of each base station, mobile station 12 performs maximum ratio combination or soft combination for the data packets. When each base station in the collaborative MIMO adopts a different modulation and coding scheme, each base station can transmit the first data packet at a time that is close (for example, in the same MAC scheduling period) but not exactly the same.

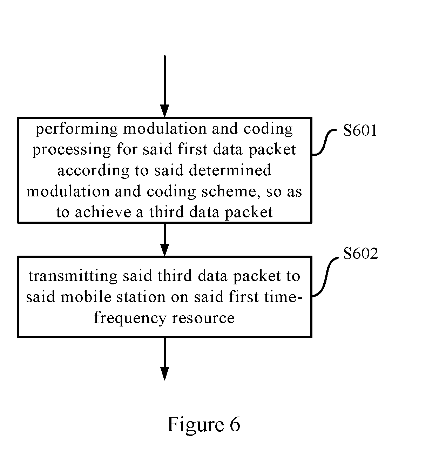

After serving base station 111 determines the modulation and coding scheme for each base station in the collaborative MIMO, serving base station 111 also executes the steps as shown in Figure 6.

First, in step S601, serving base station 111 performs modulation and coding on the first data packet using the modulation and coding scheme determined by itself in step S502 as shown in Figure 5, so as to achieve a third data packet.

Then, in step S602, serving base station 111 transmits the third data packet to mobile station 12 on the first time-frequency resource.

It should be explained that, the formats of the second data packet and the third data packet may be the same, or may be different, specifically depending on whether the modulation and coding schemes adopted by serving base station 111 for performing the two modulation and coding are the same or not.

Another thing to be explained is that, after serving base station 111 performs data link layer processing for the service data to be transmitted to mobile station 12 and achieves the first data packet, it performs data layer processing for the first data packet. According to the physical layer specifications of different protocols, different physical layer processing is required to be adopted, but at least the step of modulation and coding processing is included. For instance, for LTE-Advanced wireless communication network, physical layer processing includes steps of channel coding, hybrid ARQ processing, channel interleaving, scrambling, modulation and coding processing, mapping and pre-coding processing etc.. In the present invention, because only modulation and coding processing is different from the prior art, only the determination of the modulation and coding processing is defined.

After serving base station 111 determines the corresponding modulation and coding scheme for each base station in the collaborative MIMO and prior to step S402 as shown in Figure 4, collaborative base station 112 receives a notification of modulation and coding scheme from serving base station 111.

Next, in step S402, collaborative base station 112 performs the corresponding modulation and coding processing for the first data packet according to the modulation and coding scheme notified by serving base station 111, so as to achieve a fourth data packet. Different modulation and coding schemes result in different formats of the fourth data packet.

Thereafter, in step S403 as shown in Figure 4, collaborative base station 112 transmits the first data packet on which the modulation and coding processing has been performed, namely the fourth data packet, to mobile station 12 on the first time-frequency resource.

In the above, the transmission of one data packet is taken as an example to describe in detail the content synchronization procedure for the downlink service data in the collaborative MIMO. Those skilled in the art should understand that the procedure for the case of multiple data packets is similar to the procedure for one data packet.

For LTE-Advanced wireless communication network, data link layer processing comprises PDCP processing, RLC processing and MAC processing and scheduling. In the present invention, because serving base station 111 is required to perform data link layer processing on the data packet, one MAC scheduling period is usually multiple transmission time intervals (TTI).

Serving base station 111 can transmit, to each collaborative base station, multiple first data packets to be transmitted to mobile station 12 in a MAC scheduling period together with their corresponding information about the first time-frequency resource information and the modulation and coding scheme. Optionally, the same modulation and coding scheme can be adopted for multiple first data packets to be transmitted to mobile station 12 in one MAC scheduling period, namely that the modulation and coding scheme for each base station in the collaborative MIMO does not change in one MAC scheduling period.

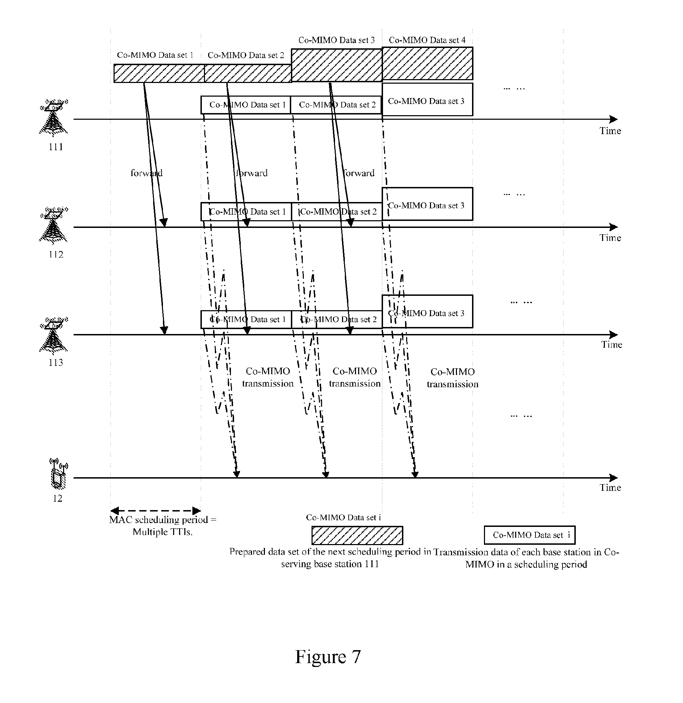

Figure 7 shows the diagram of a MAC scheduling period and data packet transmission in the collaborative MIMO, wherein the data packet set therein corresponds to the multiple first data packets in a first MAC scheduling period as described in the above.

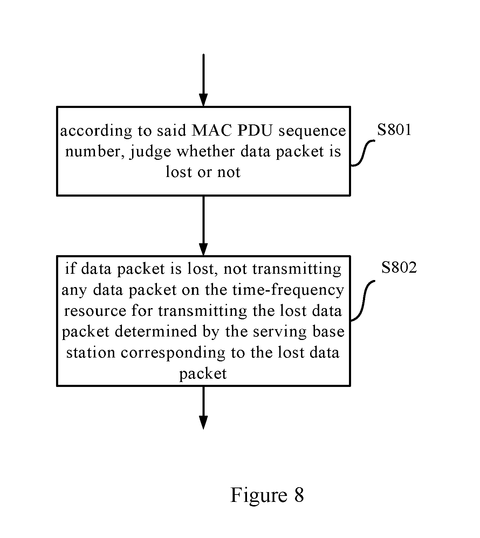

When packet loss occurs during the procedure that serving base station 111 transmits multiple first data packets to collaborative base station 112 and 113, collaborative base station 112 and 113 can further perform the processing as shown in Figure 8 to realize content synchronization, so as to avoid interference. Without loss of generality, collaborative base station 112 is taken as an example to describe this procedure shown in Figure 8 in detail.

First, in step S801, collaborative base station 112 judges whether data packet is lost according to the MAC PDU sequence number included in the first data packet from serving base station 111.

Specifically, taking the example that serving base station 111 transmits 100 first data packets to collaborative base stations 112 and 113, if the MAC PDU sequence numbers received by collaborative base station 112 are 1 to 55, 58 to 100, collaborative base station 112 judges that the two first data packets with MAC PDU sequence numbers 56 to 57 are lost.

Next, in step S802, if collaborative base station 112 judges that data packet is lost, it does not transmit any data on the corresponding time-frequency resource for transmitting the lost data packet determined by serving base station 111.

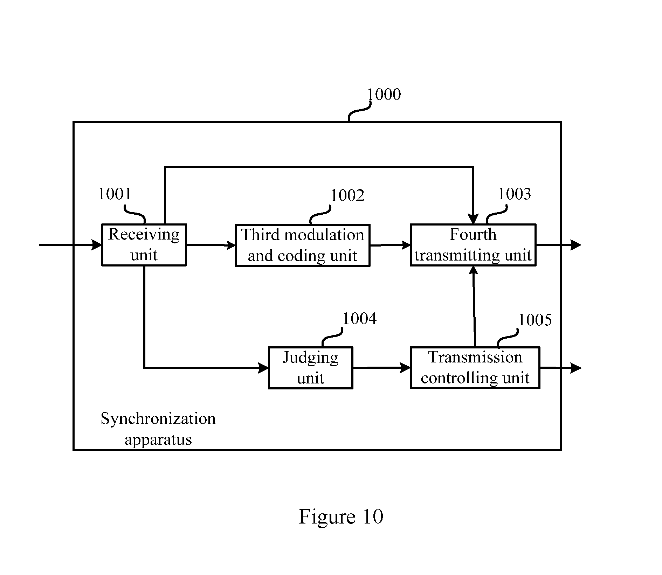

Figure 10 is a structural diagram of controlling apparatus 900 for controlling the content synchronization of the downlink service data in collaborative MIMO of a wireless communication network according to an embodiment of the present invention. Controlling apparatus 900 comprises processing unit 901, first determining unit 902, first transmitting unit 903, first modulation and coding unit 904, second transmitting unit 905, obtaining unit 906, second determining unit 907, second modulation and coding unit 908 and third transmitting unit 909.

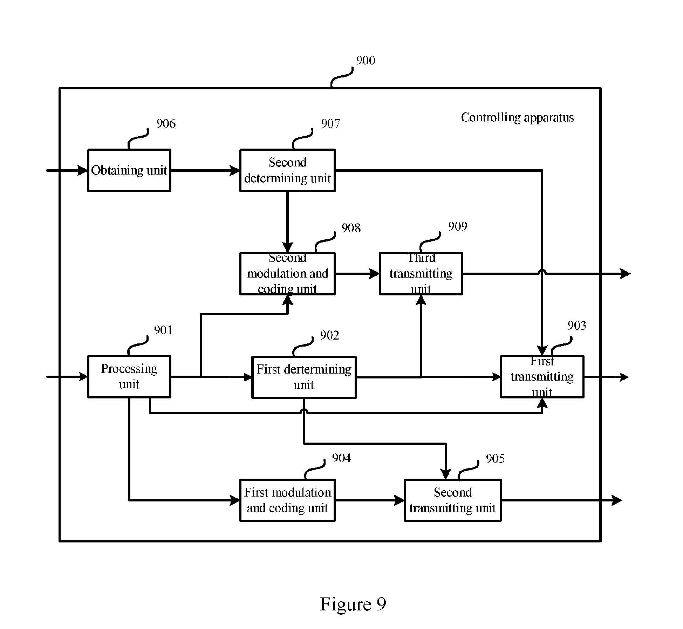

It should be explained that, for the purpose of convenience, the sub-apparatuses of many preferred embodiments are shown in Figure 9 together. Those skilled in the art should understand, according to the teaching of the present description, that only processing unit 901, first determining unit 902 and first transmitting unit 903 are the units necessary to implement the present invention, and other sub-apparatuses are optional units. In the following, the procedure that controlling apparatus 900 located in serving base station 111 controls the content synchronization of the downlink service data in the collaborative MIMO is described in detail with reference to the application scenario shown in Figure 1.

First, processing unit 901 performs data link layer processing for the service data to be transmitted to mobile station 12, so as to achieve a first data packet. For different wireless communication networks, specific data link layer processing can comprise different processing procedures. For example, for LTE-Advanced wireless communication network, data link layer processing comprises PDCP processing, RLC processing and MAC processing and scheduling.

Next, first determining unit 902 determines the information about the first time-frequency resource for transmitting the first data packet.

Finally, first transmitting unit 903 transmits the first data packet to other collaborative base stations 112 and 113 in the collaborative MIMO, respectively, and transmits the information about the first time-frequency resource to other collaborative base stations 112 and 113.

For LTE-Advanced wireless communication network, each base station has an X2 interface to communicate with the other base stations. First transmitting unit 903 can transmit the first data packet and the information about the first time-frequency resource to collaborative base stations 112 and 113 via the X2 interface.

For the application scenario shown in Figure 1, the base stations participating in the downlink service data transmission can be base station 111, base station 112 and base station 113, or can be base station 112 and base station 113, or can be base station 111 and base station 112, or can be base station 111 and base station 113. In the case that serving base station 111 participates in service data transmission, controlling apparatus 900 also performs the following functions.

First, first modulation and coding unit 904 performs modulation and coding on the first data packet obtained after the processing of processing unit 901, so as to achieve a second data packet.

Next, second transmitting unit 905 transmits the second data packet to mobile station 12 on the first time-frequency resource determined by first determining unit 902.

In the case that base station 112 and/or base station 113 participates in the service data transmission in the collaborative MIMO, base station 112 or base station 113 further comprises a synchronization unit 1000 as shown in Figure 10. In Figure 10, synchronization unit 1000 comprises receiving unit 1001, third modulation and coding unit 1002, fourth transmitting unit 1003, judging unit 1004, and transmission controlling unit 1005. It should be explained that, for the purpose of convenience, the sub-apparatuses of many preferred embodiments are shown in Figure 10 together, and those skilled in the art should understand, according to the teaching of the present description, that only receiving unit 1001, third modulation and coding unit 1002 and fourth transmitting unit 1003 are units necessary to realize the present invention, and other sub-apparatuses are optional units. The procedure that synchronization apparatus 1000 located in collaborative base station 112 performs content synchronization for the downlink service data in the collaborative MIMO is described in detail with reference to the application scenario shown in Figure 1.

First, receiving unit 1001 receives the fist data packet, which comes from serving base station 111 and on which serving base station 111 performs data link layer processing, and the information about the first time-frequency resource for transmitting the first data packet determined by serving base station 111.

Next, third modulation and coding unit 1002 performs modulation and coding processing for the first data packet, so as to achieve a fourth data packet.

Finally, fourth transmitting unit 1003 transmits the fourth data packet to mobile station 12 on the first time-frequency resource.

It should be explained that, the formats of the second data packet and the fourth data packet may be the same, or may be different, specifically depending on the modulation and coding schemes adopted by serving base station 111 and collaborative base station 112. If serving base station 111 and collaborative base station 112 adopt the same modulation and coding scheme, the formats of the second data packet and the fourth data packet are the same; if serving base station 111 and collaborative base station 112 adopt different modulation and coding schemes, the formats of the second data packet and the fourth data packet are different.

Specifically, in the collaborative MIMO described in Figure 1, the way of the modulation and coding scheme adopted by each base station to transmit the first data packet to mobile station 12 includes at least two cases: one is that serving base station 111 determines the corresponding modulation and coding scheme for each base station in the collaborative MIMO according to the information associated with channel quality of the downlink channel from each base station to mobile station 12. The other is that each base station in the collaborative MIMO determines, by itself, the modulation and coding scheme for transmitting the first data packet. The two ways are respectively described in detail in the following.

A detailed implementation of the first way is now described in the following.

First, obtaining unit 906 obtains the information associated with channel quality of the downlink channel from each of base station 112 and 113 in the collaborative MIMO to mobile station 12.

Specifically, for the collaborative MIMO as shown in Figure 1, serving base station 111 transmits an indication to instruct mobile station 12 to measure the channel quality of the downlink channels from base stations 111, 112 and 113 to it. Mobile station 12 measures the channel quality of the downlink channel from each of base stations 112 and 113 to itself according to the synchronization broadcast information received from each of base stations 112 and 113, so as to achieve the information associated with channel quality. Mobile station 12 also measures the channel quality of the downlink channel from serving base station 111 to it according to the unicast or broadcast information received from serving base station 111, so as to achieve the information associated with channel quality. Thereafter, mobile station 12 sends the information associated with channel quality of each channel back to base station 111. The information associated with channel quality refers to the information indicating channel quality, including but not limited to parameters such as channel quality indicator (CQI) or signal to noise ratio (SNR) or signal to interference and noise ratio (SINR) or the like. Optionally, the information associated with channel quality can be the statistical average value of multiple transient values within a period of time, so as to eliminate the impact of burst interference.

Next, second determining unit 907 determines, for each base station 112 and 113 in the collaborative MIMO, the modulation and coding scheme for transmitting the first data packet according to the information associated with channel quality obtained by obtaining unit 906.

Finally, first transmitting unit 903 transmits the corresponding modulation and coding scheme of each collaborative base station 112 and 113 to the corresponding base station.

Specifically, second determining unit 907 can determine, for each base station in the collaborative MIMO, the modulation and coding scheme for transmitting the first data packet, respectively. In general, for the downlink channel with better channel quality indicated by the information associated with channel quality, the modulation and coding scheme with higher data throughput but lower error resilience can be adopted, such as MCS-5 to MCS-9 in Enhanced Data Rate for GSM Evolution (EDGE). For the downlink channel with worse channel quality indicated by the information associated with channel quality, the modulation and coding scheme with low data throughput but high error resilience can be adopted, such as MCS-1 to MCS-4 in Enhanced Data Rate for GSM Evolution.

Optionally, second determining unit 907 can also determine the same modulation and coding scheme for transmitting the first data packet for each base station in the collaborative MIMO. In the case that second determining unit 907 determines the same modulation and coding scheme for each base station in the collaborative base station of the collaborative MIMO, optionally, second determining unit 907 can determine the modulation and coding scheme corresponding to the downlink channel with the worst channel quality as the modulation and coding scheme for each base station in the collaborative MIMO; second determining unit 907 can also determine the modulation and coding scheme corresponding to the downlink channel of the worse channel quality as the modulation and coding scheme for each base station in the collaborative MIMO.

In the collaborative MIMO as shown in Figure 1, without loss of generality, the example that the channel quality of the downlink channel from serving base station 111 to mobile station 12 is better than that from collaborative base station 112 to mobile station 12, and the channel quality of the downlink channel from serving base station 112 to mobile station 12 is better than that from collaborative base station 113 to mobile station 12 is taken to describe an embodiment of determining, by serving base station 111, the same modulation and coding scheme for each base station in the collaborative MIMO.

Without loss of generality, assume that the modulation and coding scheme corresponding to the channel quality of the downlink channel from serving base station 111 to mobile station 12 is MCS5, the modulation and coding scheme corresponding to the channel quality of the downlink channel from collaborative base station 112 to mobile station 12 is MCS4, and the modulation and coding scheme corresponding to the channel quality of the downlink channel from collaborative base station 113 to mobile station 12 is MCS3. Second determining unit 907 can either use MCS3 as the modulation and coding scheme for the first data packet for each base station in the collaborative MIMO, or use MCS4 as the modulation and coding scheme for the first data for each base station in the collaborative MIMO. Certainly, second determining unit 907 can also used MCS5 as the modulation and coding scheme for the first data packet for each base station in the collaborative MIMO.

Above are the detailed description for the case that second determining unit 907 determines the corresponding modulation and coding scheme for each base station in the collaborative MIMO according to the information associated with the downlink channel from each base station in the collaborative MIMO to mobile station 12. The following are the detail description for the case that each base station in the collaborative MIMO determines, by itself, the modulation and coding scheme for transmitting the first data packet.

The case that each base station determines, by itself, the modulation and coding scheme for transmitting the first data packet in the collaborative MIMO can further be divided into two cases: 1) each base station adopts the same modulation and coding scheme for the data packets to be collaboratively transmitted to mobile station 12 according to a prior agreement; 2) each base station in the collaborative MIMO independently determines, by itself, the modulation and coding scheme for transmitting the first data packet.

Because in the collaborative MIMO, mobile station 12 usually locates on the edge of each cell, each base station can therefore adopt the modulation and coding scheme with lower data throughput but higher error resilience.

For case 1) as mentioned above, for example, for LTE-Advanced wireless communication network, each base station in the collaborative MIMO can make an agreement in advance to adopt the modulation and coding scheme of MCS3.

For case 2) as mentioned above, each base station in the collaborative MIMO independently determines the modulation and coding scheme for transmitting the first data packet. The modulation and coding scheme independently determined by each base station can be the same or different. For example, for LTE-Advanced wireless communication network, serving base station 111 can adopt the modulation and coding scheme of MCS4; collaborative base station 112 can adopt the modulation and coding scheme of MCS3; collaborative base station 113 can adopt the modulation and coding scheme of MCS3.

The advantage of adopting the same modulation and coding scheme for each base station in the collaborative MIMO is that each base station transmits exactly the identical data packet to mobile station 12 on the first time-frequency resource, namely that the mobile station 12 combines, in radio frequency, the second data packet or the third data packet transmitted by serving base station 111 and the fourth data packet transmitted by collaborative base station 113 or 114 without the need of distinguishing which base station the data packets come from.

When a different modulation and coding scheme is adopted by each base station in the collaborative MIMO, the data packet transmitted by each base station is different, and after receiving the data packet of each base station, mobile station 12 performs maximum ratio combination or soft combination for the data packets. When the different modulation and coding scheme is adopted by each base station in the collaborative MIMO, each base station can transmit the first data packet at a time that is close (for example, in the same MAC scheduling period) but not exactly the same.

After second determining unit 907 determines the corresponding modulation and coding scheme for each base station in the collaborative MIMO, controlling apparatus 900 further performs the following functions.

First, second modulation and coding unit 908 performs modulation and coding processing for the first data packet according to the modulation and coding scheme determined by second determining unit 907 for serving base station 111, so as to achieve a third data packet.

Next, third transmitting unit 909 transmits the third data packet to mobile station 12 on the first time-frequency resource.

It should be explained that, the formats of the second data packet and the third data packet can be the same, or can be different, specifically depending on whether the modulation and coding schemes adopted by first modulation and coding unit 904 and second modulation and coding unit 908 in the two modulation and coding are the same or not.

Another thing to be explained is that, after serving base station 111 performs data link layer processing for the service data to be transmitted to mobile station 12, and achieve the first data packet, it performs physical layer processing for the first data packet, and according to the physical specifications of different protocols, the physical layer processing required to be adopted is also different, but at least includes modulation and coding processing step. For example, for LTE-Advanced wireless communication network, physical layer processing includes steps of channel coding, hybrid ARQ processing, channel interleaving, scrambling, modulation and coding processing, mapping and pre-coding processing etc.. In the present invention, because only modulation and coding processing scheme is different from the prior art, only the determination of modulation and coding processing scheme is defined here.

After serving base station 111 determines the corresponding modulation and coding scheme for each base station in the collaborative MIMO, synchronization apparatuses 1000 in collaborative base stations 112 and 113 further perform the following functions, which are described in detail by taking synchronization apparatus 1000 in base station 112 as an example.

First, receiving unit 1001 receives a notification of the modulation and coding scheme from serving base station 111.

Next, third modulation and coding unit 1002 performs corresponding modulation and coding processing for the first data packet according to the modulation and coding scheme notified by serving base station 111.

Thereafter, as described in the above, fourth transmitting unit 1003 transmits the first data packet on which the modulation and coding processing has been performed, namely the fourth data packet, to mobile station 12 on the first time-frequency resource.

In the above, the transmission of one data packet is taken as an example to describe the content synchronization procedure of the downlink service data in the collaborative MIMO in detail. Those skilled in the art should understand that the procedure for the case of multiple data packets is similar to the procedure for one data packet.

For LTE-Advanced wireless communication network, data link layer processing includes PDCP processing, RLC processing and MAC processing and scheduling. In the present invention, because it is required that serving base station 111 performs data link layer processing for the data packets, one MAC scheduling period is usually multiple transmission time intervals (TTIs).

Controlling apparatus 900 can transmit, to each collaborative base station, multiple first data packets to mobile station 12 together with their corresponding information about the first time-frequency resource and the modulation and coding schemes in a MAC scheduling period. Optionally, the same modulation and coding scheme can be adopted for multiple first data packets to be transmitted to mobile station 12 in one MAC scheduling period, namely that in one period of MAC scheduling, the modulation and coding scheme of each base station in the collaborative MIMO does not change.

When packet loss occurs during the procedure that serving base station 111 transmits multiple first data packets to collaborative base station 112 and 113, synchronization apparatuses 1000 in collaborative base station 112 and 113 further performs the following procedure to realize content synchronization, so as to avoid interference. Without loss of generality, synchronization apparatus 1000 of collaborative base station 112 is taken as an example to describe this procedure in detail.

First, judging unit 1004 judges whether data packet is lost according to the MAC PDU sequence number comprised in the first data packet received by receiving unit 1001 from serving base station 111.

Specifically, taking the example that serving base station 111 transmits 100 first data packets to collaborative base station 112 and 113, if the MAC PDU sequence numbers received by receiving unit 1001 is 1 to 55, 58 to 100, judging unit 1004 judges that two first data packets with MAC PDU sequence numbers 56 to 57 are lost.

Next, if judging unit 1004 judges that data packet is lost, transmission controlling unit 1005 controls fourth transmitting unit 1003 not to transmit any data packet on the time-frequency resource which corresponds to the lost data packet and is determined by serving base station 111 to transmit the lost data packet.

It should be explained that, above, the working procedures of controlling apparatus 900 and synchronization apparatus 1000 are defined in terms function, and those skilled in the art should understand that in particular implementation, first modulation and coding unit 904 and second modulation and coding unit 908 can be implemented by the same modulation and coding unit; second transmitting unit 905 and third transmitting unit 906 can also be implemented by the same transmitting unit.

The embodiment of the present invention has been described in the above. It should be understood that the present invention is not limited to the above specific embodiments, and any alternation or modification can be made by those skilled in the art without departing from the scope as defined by the appended claims. The technical solution of the present invention can be realized either by software or by hardware.

## Claims

1. A method of controlling, in a serving base station in collaborative MIMO of a wireless communication network, content synchronization for downlink service data in said collaborative MIMO, **characterized by** comprising the following steps of:
a. performing data link layer processing for service data to be transmitted to a mobile station so as to achieve a first data packet;
b. determining about a first time-frequency resource for transmitting said first data packet;
c. transmitting, respectively, said first data packet to all other collaborative base station(s) in said collaborative MIMO, and transmitting said information about said first time-frequency resource to said other collaborative base station(s).

2. A method according to claim 1, **characterized by**, further comprising the following steps after said step c:
i. performing modulation and coding for said first data packet, so as to achieve a second data packet;
ii. transmitting said second data packet to said mobile station on said first time-frequency resource.

3. A method according to claim 1, **characterized in that** said method further comprises steps of:
obtaining information associated with channel quality of downlink channel from each base station in said collaborative MIMO to said mobile station;
determining, for each base station in said collaborative MIMO, a modulation and coding scheme used to transmit said first data packet according to said information associated with channel quality;
transmitting the corresponding modulation and coding scheme of each collaborative base station to the corresponding collaborative base station.

4. A method according to claim 3, **characterized by** further comprising steps of:
- performing modulation and coding on said first data packet according to said determined modulation and coding scheme, so as to achieve a third data packet;
- transmitting said third data packet to said mobile station on said first time-frequency resource.

5. A method according to claim 3, **characterized in that** said step II comprises a step of:
- determining a same modulation and coding scheme used to transmit said first data packet for each base station in said collaborative MIMO according to said information associated with channel quality.

6. A method according to claims 1 or 3, **characterized in that** said wireless communication network is advanced LTE wireless communication network, and said serving base station has an X2 interface to communicate with other collaborative base stations, and performs said transmitting via the X2 interface.

7. A method according to claim 1, **characterized in that** said data link layer processing includes PDCP processing, RLC processing and MAC processing and scheduling.

8. A method according to claim 7, **characterized in that** said MAC scheduling period is multiple transmission time intervals.

9. A method according to claim 8, **characterized in that** the modulation and coding scheme of each said collaborative MIMO station is fixed within a MAC scheduling period.

10. A method of performing, in a collaborative MIMO base station in collaborative MIMO of a wireless communication network, content synchronization for downlink service data in said collaborative MIMO, **characterized in that** said method comprises the following steps of:
A. receiving, from a serving base station, a first data packet for which data link layer processing is performed by said serving base station, and information about a first time-frequency resource for transmitting said first data packet determined by said serving base station;
B. performing modulation and coding for said first data packet, so as to achieve a fourth data packet;
C. transmitting said fourth data packet to a mobile station on said first time-frequency resource.

11. A method according to claim 10, **characterized in that** said method further comprises a step of:
- receiving a notification of a modulation and coding scheme from said serving base station;
said step B further comprises a step of:
- performing modulation and coding for said first data packet according to said modulation and coding scheme.

12. A method according to claim 10, **characterized in that** said first data packet from said serving base station comprises a MAC PDU sequence number, and said method further comprising steps of:
- judging whether a data packet is lost according to said MAC PDU sequence number;
- if a data packet is lost, not transmitting any data on the corresponding time-frequency resource for transmitting the lost packet determined by said serving station.

13. A method according to claim 10 or 11, **characterized in that** said wireless communication network is advanced LTE wireless communication network, and said collaborative base station has an X2 interface to communicate with said serving base station, and performs said receiving via the X2 interface.

14. A method according to claim 10, **characterized in that** said data link layer processing comprises PDCP processing, RLC processing and MAC processing and scheduling.

15. A controlling apparatus in a serving base station in collaborative MIMO of a wireless communication network for controlling content synchronization for downlink service data in the collaborative MIMO, **characterized in that** the controlling apparatus comprises:
a processing unit, configured to perform data link layer processing for service data to be transmitted to a mobile station, so as to achieve a first data packet;
a first determining unit, configured to determine information about a first time-frequency resource for transmitting said first data packet;
a first transmitting unit, configured to transmitting said first data packet to all other collaborative station(s) in said collaborative MIMO, and to transmit said information about said first time-frequency resource to said other collaborative station(s).

16. A controlling apparatus according to claim 15, **characterized by**, further comprising:
a first modulation and coding unit, configured to perform modulation and coding for said first data packet, so as to achieve a second data packet;
a second transmitting unit, configured to transmit said second data packet to said mobile station on said first time-frequency resource.

17. A controlling apparatus according to claim 15, **characterized by** further comprising:
an obtaining unit, configured to obtaining information associated with channel quality of downlink channel from each base station in said collaborative MIMO to said mobile station;
a second determining unit, configured to determine, for each station in said collaborative MIMO, a modulation and coding scheme used to transmit said first data packet according to said information associated with channel quality;
wherein said first transmitting unit is further configured to:
transmit the corresponding modulation and coding scheme of each collaborative base station to the corresponding collaborative base station.

18. A controlling apparatus according to said claim 17, **characterized by** further comprising:
a second modulation and coding unit, configured to perform modulation and coding on said first data packet according to the modulation and coding scheme determined by said second determining unit, so as to achieve a third data packet;
a third transmitting unit, configured to transmit said third data packet to said mobile station on said first time-frequency resource.

19. A controlling apparatus according to claim 17, **characterized in that** said second determining unit is further configured to:
- determine a same modulation and coding scheme used to transmit said first data packet for each base station in said collaborative MIMO.

20. A controlling apparatus according to claims 15 or 17, **characterized in that** said wireless communication network is advanced LTE wireless communication network, and said serving base station has an X2 interface to communicate with the other collaborative station(s), and said first transmitting unit performs said transmitting via the X2 interface.

21. A controlling apparatus according to claim 15, **characterized in that** said data link layer processing comprises PDCP processing, RLC processing and MAC processing and scheduling.

22. A controlling apparatus according to claim 21, **characterized in that** said MAC scheduling period is multiple transmission time intervals.

23. A controlling apparatus according to claim 22, **characterized in that** the modulation and coding scheme of each base station in said collaborative MIMO is fixed within a MAC scheduling period.

24. A synchronization apparatus in a collaborative base station in collaborative MIMO of a wireless communication network, for performing content synchronization for downlink service data in said collaborative MIMO, **characterized in that** said synchronization apparatus comprises:
a receiving unit, configured to receive, from a serving base station, a first data packet for which data link layer processing is performed by said serving base station, and information about a first time-frequency resource for transmitting said first data packet determined by said serving base station;
a third modulation and coding unit, configured to perform modulation and coding for said first data packet, so as to achieve a fourth data packet;
a fourth transmitting unit, configured to transmit said fourth data packet to a mobile station on said first time-frequency resource.

25. A synchronization apparatus according to claim 24, **characterized in that** said receiving unit is further configured to:
- receive a notification of a modulation and coding scheme from said serving base station;
said third modulation and coding unit is further configured to:
- perform modulation and coding on said first data packet according to said modulation and coding scheme.

26. A synchronization apparatus according to claim 24, **characterized in that** said first data packet from serving base station comprises a MAC PDU sequence number, and said synchronization apparatus further comprises:
a judging unit, configured to judge whether a data packet is lost according to said MAC PDU sequence number;
a controlling unit, configured to, if a data packet is lost, control said third transmitting unit not to transmit any data on the corresponding time-frequency resource for transmitting the lost data packet determined by said serving station.

27. A synchronization apparatus according to claims 24 or 25, **characterized in that**, said wireless communication network is advanced LTE wireless communication network, and said collaborative base station has an X2 interface to communicate with said serving base station, and said receiving unit performs said receiving via the X2 interface.

28. A synchronization apparatus according to claim 24, **characterized in that** said data link layer processing comprises PDCP processing, RLC processing and MAC processing and scheduling.
